# EUROPÄISCHE PATENTSCHRIFT

(11) **EP 0 583 295 B1**
(45) Veröffentlichungstag und Bekanntmachung des Hinweises auf die Patenterteilung: **23.11.1994**
(21) Anmeldenummer: 92909419.1
(22) Anmeldetag: 27.04.1992
(51) Int. Cl.: B64D 9/00, B64C 1/20

(54) **SCHNELL-BEFESTIGUNGSVORRICHTUNG**
QUICK-RELEASE FASTENING DEVICE
DISPOSITIF DE FIXATION RAPIDE

(30) Priorität: 27.04.1991 DE 4113824
(43) Veröffentlichungstag der Anmeldung: 23.02.1994
(73) Patentinhaber: MICHLER, Walter, D-82279 Eching (DE)
(72) Erfinder: MICHLER, Walter, D-82279 Eching (DE)
(74) Vertreter: Grättinger & Partner (GbR)
(86) Internationale Anmeldenummer: EP9200917
(87) Internationale Veröffentlichungsnummer: WO9219496

(56) Entgegenhaltungen:
- EP-A- 0 105 675
- EP-A- 0 215 495
- DE-A- 1 431 569
- DE-A- 2 732 460
- US-A- 3 381 921
- US-A- 4 277 043

## Beschreibung

Die vorliegende Erfindung betrifft eine Schnell-Befestigungsvorrichtung zur Befestigung von Komponenten der Innenraumgestaltung eines Flugzeuges, Helikopters oder Raumfahrzeuges bzw. von Lastverzurrelementen an im Boden oder in Wandflächen des Innenraumes verlegten C-förmigen Befestigungsschienen, umfassend einen Grundkörper, mindestens ein dem Grundkörper zugeordnetes, der Längsarretierung der Befestigungsvorrichtung in der Befestigungsschiene dienendes Rastelement und einen in Längsrichtung der Befestigungsvorrichtung verschiebbar in dem Grundkörper geführten Riegelkörper mit mindestens einem pilzförmigen, zum Eingriff in die Hinterschneidungen der Befestigungsschiene bestimmten Riegelelement.

Schnell-Befestigungsvorrichtungen sind in verschiedenen Ausgestaltungen bekannt und im Einsatz. Sie sind gebräuchlich in drei verschiedenen Kategorien, nämlich zum Zusammenwirken mit Befestigungsschienen der Kategorien (Gattungen) "Light Duty Track", "Medium Duty Track" und "Heavy Duty Track". Eine gattungsgemäße Schnell-Befestigungsvorrichtung ist aus der EP-A-0105675 bekannt. Bei Verwendung dieser Befestigungsvorrichtung kann die zu befestigende Einbaukomponente unmittelbar in der Position, in der sie auf die Befestigungsschiene aufgesetzt wurde, an dieser befestigt werden; ein Verschieben der Einbaukomponente ist nicht erforderlich. Der bei der bekannten Befestigungsvorrichtung verwendete Grundkörper weist eine Nut mit einem T-förmigen Querschnitt auf, in der der Riegelkörper geführt ist. Diese Druckschrift enthält jedoch keine Angabe darüber, auf welche Weise der Riegelkörper in dem Grundkörper verschoben wird. Auch wird in ihr nicht das Problem behandelt, wie eine spielfreie, gegen Klappern gesicherte Verbindung zwischen der Schnell-Befestigungsvorrichtung und der Befestigungsschiene hergestellt werden kann.

Weitere Schnell-Befestigungsvorrichtungen sind beispielsweise aus der Deutschen Offenlegungsschrift 25 56 000, der Deutschen Auslegeschrift 21 61 735 und der US-Patentschrift 36 77 195 bekannt. Die pilzförmigen Riegelelemente sind dabei jeweils starr mit dem jeweiligen Grundkörper verbunden, während die als Rastelemente vorgesehenen zylindrischen Rastzapfen in ihrer Axialrichtung verschieblich in dem jeweiligen Grundkörper aufgenommen sind. Mit dem entsprechenden Betätigungshebel werden die Rastzapfen in dem Grundkörper angehoben bzw. abgesenkt. Die Befestigung der Schnell-Befestigungsvorrichtung in der Befestigungsschiene erfolgt dabei in der Weise, daß die Befestigungsvorrichtung in einer Stellung auf die Befestigungsschiene aufgesetzt wird, in welcher die pilzförmigen Riegelelemente mit ihren Köpfen durch die Aussparungen der Befestigungsschienen hindurchtreten können; anschließend wird die Befestigungsvorrichtung in Längsrichtung der Befestigungsschiene um eine halbe Teilung, d.h. um die Hälfte des Abstandes zwischen zwei Aussparungen der Befestigungsschiene verschoben, so daß die Köpfe der Riegelelemente hinter die jeweils zwischen zwei Aussparungen angeordneten Vorsprünge der Befestigungsschienen greifen. Abschließend wird der Rastzapfen durch Bedienung des Betätigungshebels abgesenkt und rastet in eine Aussparung der Befestigungsschiene ein und verhindert auf diese Weise eine weitere Längsverschiebung der Befestigungsvorrichtung in der Befestigungsschiene.

Die Schnell-Befestigungsvorrichtung gemäß der deutschen Auslegeschrift 27 32 460 arbeitet nach dem gleichen Befestigungsprinzip. Allerdings sind hier die Riegelelemente nicht starr an dem Grundkörper befestigt, sondern vielmehr an Platten angeordnet, welche bezüglich des Grundkörpers in geringem Umfang verschwenkt werden können, so daß alle Riegelelemente gleichmäßig belastet werden. Nach dem gleichen, oben beschriebenen Befestigungsprinzip arbeitet ferner die Schnell-Befestigungsvorrichtung nach der Deutschen Offenlegungsschrift 36 31 097, wobei hier der Rastzapfen nicht axial verschiebbar im Grundkörper geführt, sondern vielmehr an einem im Grundkörper schwenkbar aufgenommenen Kipphebel angeordnet ist. Schließlich arbeiten nach dem gleichen, oben beschriebenen Befestigungsprinzip die Befestigungsvorrichtungen nach der Deutschen Offenlegungsschrift 38 04 354 und der Deutschen Patentschrift 34 47 178, wobei die entsprechenden Befestigungsvorrichtungen allerdings keinen Betätigungshebel aufweisen. Bei den genannten Vorrichtungen wird der Rastzapfen unter Zuhilfenahme eines Werkzeuges in seiner Axialrichtung im Grundkörper verschoben, um die Arretierung der Befestigungsvorrichtung in der Befestigungsschiene herbeizuführen bzw. zu lösen.

Aus dem US-Patent 41 85 799 ist schließlich eine Befestigungsvorrichtung bekannt, welche erst an Ort und Stelle, d.h. auf der Befestigungsschiene aus den Einzelteilen zusammengefügt und montiert wird; es handelt sich demnach nicht um eine Schnell-Befestigungsvorrichtung. Die Montage der Befestigungsvorrichtung erfolgt dabei in der Weise, daß zunächst ein Riegelkörper mit pilzförmigen Riegelelementen von oben in die Befestigungsschiene eingesetzt wird, wobei die Riegelelemente durch entsprechende Aussparungen in der Befestigungsschiene hindurchtreten, und anschliessend um eine halbe Teilung in Längsrichtung der Befestigungsschiene verschoben wird; sodann wird eine Scheibe in eine Aussparung der Befestigungsschiene ein- und auf den Riegelkörper aufgelegt, so daß der Riegelkörper gegen Längsverschieben gesichert ist. Schließlich wird der Grundkörper in Längsrichtung der Befestigungsschiene auf einen entsprechenden Vorsprung des Riegelkörpers aufgeschoben und Grundkörper, Riegelkörper und Scheibe werden mittels einer Schraube miteinander verspannt.

Sämtlichen zuletzt genannten Befestigungsvorrichtungen ist somit eigen, daß der jeweilige Grundkörper, welcher die zu befestigende Komponente der Innenraumgestaltung des Flugzeuges trägt, nicht in seiner endgültigen Position auf die Befestigungsschiene aufgesetzt wird. Der Grundkörper wird bei diesen Vorrichtungen vielmehr erst durch Verschiebung auf der Befestigungsschiene in deren Längsrichtung in seine endgültige Position gebracht. Dies hat den Nachteil, daß der in Flugzeuginnenräumen zur Verfügung stehende Raum nicht optimal genutzt wird, nachdem die einzubauenden Komponenten nicht immer optimal angeordnet werden können. Denn durch das Erfordernis, daß zur Montage der Befestigungsvorrichtung im allgemeinen eine halbe Teilung, das ist nach dem herrschenden Standard 0,5 Zoll, Raum in Längsrichtung der Befestigungsschiene bereitgehalten wird, geht entsprechender Raum verloren. In vielen Fällen steht der zur Verschiebung notwendige Raum gar nicht zur Verfügung, wodurch die Verwendung der bekannten Schnell-Befestigungsvorrichtung gänzlich unmöglich wird.

Der vorliegenden Erfindung liegt die Aufgabe zugrunde, eine gattungsgemäße Schnell-Befestigungsvorrichtung zu schaffen, die eine spielfreie, gegen Klappern gesicherte Verbindung zwischen der Befestigungsvorrichtung und der Befestigungsschiene ermöglicht. Dabei soll die Befestigungsvorrichtung als Bindeglied zwischen Flugzeug bzw. Helikopter oder dergleichen und Einbaukomponente ohne Werkzeug rasch auf der Befestigungsschiene montiert werden können. Sie soll darüberhinaus zur Befestigung der verschiedensten Komponenten genutzt werden können.

Erfindungsgemäß wird diese Aufgabe dadurch gelöst, daß ein Betätigungshebel vorgesehen ist, der mit dem Riegelkörper in einer Wirkungsverbindung steht, derart, daß sich bei Verschwenken des Betätigungshebels der Riegelkörper bezüglich des Grundkörpers in dessen Längsrichtung verschiebt, und daß die Führung des Riegelkörpers in dem Grundkörper in der Weise erfolgt, daß sich der Abstand der Riegelelmente zu den Klemmkanten des Grundkörpers beim Verschieben des Riegelkörpers von der Montagestellung in die Riegelstellung verringert, zur Herstellung einer Anti-Rattle-Verbindung. Der in Längsrichtung des Grundkörpers gemessene Abstand des Riegelelements/der Riegelelemente von dem/den Rastelement(en) läßt sich somit durch Verschwenken des Betätigungshebels verändern. Unter "Längsrichtung" des Grundkörpers wird dabei stets die Richtung verstanden, welche parallel zur Längsrichtung der Befestigungsschiene, mit welcher die Befestigungsrichtung zusammenwirken soll, verläuft. Zur Herstellung der Anti-Rattle-Verbindung zwischen der Befestigungsvorrichtung und der Befestigungsschiene können die Führungen, in welchen der Riegelkörper in dem Grundkörper gleitet, wenn er zwischen der Montagestellung und der Riegelstellung verschoben wird, mit einer geringfügigen Neigung angeordnet sein, wobei die Neigung in der Weise verläuft, daß sich der Abstand zwischen den Klemmkanten des Grundkörpers und den Klemmflächen der Riegelelemente beim Verschieben des Riegelkörpers von der Montagestellung in die Riegelstellung verringert. Auf diese Weise werden in der Riegelstellung der Befestigungsvorrichtung die Vorsprünge der Befestigungsschiene fest zwischen die Klemmkanten des Grundkörpers und die Riegelelemente des Riegelkörpers eingeklemmt, was zu einem rüttelfreien Verriegelungszustand führt. Somit können die sonst üblichen "Anti-Rattle"-Konterelemente entfallen.

Im folgenden wird die Erfindung anhand von solchen Befestigungsvorrichtungen erläutert, die mehrere Rastelemente und Riegelelemente besitzen. Für Befestigungsvorrichtungen mit nur einem Rastelement und/oder Riegelelement gilt jedoch Entsprechendes.

Die Rastelemente können als starr mit dem Grundkörper verbundene Rastzapfen ausgebildet sein; dies gestattet insbesondere einen einfachen Aufbau der erfindungsgemäßen Vorrichtung aus möglichst wenig Einzelteilen. Es können jedoch auch in axialer Richtung verschieblich in dem Grundkörper geführte Rastzapfen vorgesehen sein; bei einer derartigen Ausgestaltung kann die auf die Befestigungsschiene aufgesetzte Befestigungsvorrichtung, wenn die Rastzapfen angehoben und außer Eingriff mit den entsprechenden Aussparungen der Befestigungsschiene gebracht werden, in Längsrichtung verschoben werden, was bei bestimmten Einbaubedingungen von Vorteil ist. Das Anheben der Rastzapfen kann unabhängig von der Verschiebebewegung des Riegelkörpers oder mit dieser mechanisch gekoppelt erfolgen. Der gleiche Vorteil läßt sich dadurch erreichen, daß die Rastelemente aus beidseitig abgeflachten, um ihre Achse drehbar gelagerten Rastzapfen bestehen. Die Abflachungen sind dabei derart, daß die kleinste Breite der Rastzapfen geringer ist als die lichte Weite zwischen zwei einander gegenüberstehenden Vorsprüngen der Befestigungsschiene. Werden die Rastzapfen in die Stellung gedreht, in der ihre größte Breite in Längsrichtung der Befestigungsschiene verläuft bzw. ihre geringste Breite quer zu dieser, so können die Rastzapfen zwischen den Vorsprüngen der Befestigungsschienen hindurchtreten, und die Befestigungsvorrichtung kann auf dieser verschoben werden. Durch Verdrehen der Rastzapfen um 90° wird die Befestigungsvorrichtung auf der Befestigungsschiene in Längsrichtung arretiert.

Eine weitere bevorzugte Ausgestaltung der Befestigungsvorrichtung weist Rastelemente auf, die aus jeweils zwei Rastzapfensegmenten bestehen. Diese stehen einander in Querrichtung der Vorrichtung gegenüber, und zwischen ihnen ist eine Nut, in der der Riegelkörper geführt wird. Diese Rastzapfensegmente besitzen eine relativ kurze axiale Erstreckung, d.h. sie reichen, bei auf die Befestigungsschiene aufgesetzter Befestigungsvorrichtung, nicht bis auf den Boden der Befestigungsschiene; sie enden vielmehr so weit oberhalb des Bodens der Befestigungsschiene, daß in dem entstehenden Zwischenraum die Köpfe der Riegelelemente Platz finden können.

In der Montagestellung, d.h. in der Stellung, in welcher die erfindungsgemäße Befestigungsvorrichtung auf die Befestigungsschiene aufgesetzt wird, weisen die Riegelelemente von den Rastelementen einen Abstand auf, der der Teilung der Befestigungsschiene oder einem ganzzahligen Vielfachen hiervon entspricht. Bei als massive Rastzapfen ausgebildeten Rastelementen entspricht der Abstand zwischen Rastzapfen und Riegelelement in der Montagestellung mindestens dem einfachen Wert der Teilung der Befestigungsschiene. Wenn hingegen die Rastelemente aus zwei Rastzapfensegmenten mit dazwischen geführten Riegelkörper bestehen, können in der Montagestellung des Riegelkörpers die Riegelelemente und die Rastelemente koaxial ausgerichtet sein, d.h. die Köpfe der Riegelelemente kommen in Verlängerung der Rastzapfensegmente zu liegen. Dies gestattet einen besonders kompakten, platzsparenden Aufbau der Befestigungsvorrichtung auch in dem Fall, daß zwei oder mehr Riegelelemente und Rastelemente vorgesehen sind.

Wenn die Befestigungsvorrichtung in der Montagestellung auf die Befestigungsschiene aufgesetzt wird, treten die Rastelemente in entsprechende Aussparungen der Befestigungsschiene ein bzw. befinden sich die als axialverschieblich geführter Zylinder ausgebildeten Rastzapfen, sofern sie angehoben sind, oberhalb entsprechender Aussparungen; und gleichzeitig treten die pilzförmigen Riegelelemente durch entsprechende Aussparungen der Befestigungsschiene hindurch. Durch Umlegen des Betätigungshebels in die Riegelstellung, d.h. in die Stellung, in welcher die Befestigungsvorrichtung fest mit der Befestigungsschiene verbunden ist, wird der Riegelkörper in der Befestigungsschiene verschoben, und zwar um eine halbe Teilung der Befestigungsschiene, während der Grundkörper, durch die - dann ggf. abgesenkten - Rastelemente gesichert, seine Position beibehält. Hierdurch liegen in der Riegelstellung die Riegelelemente unter den zwischen zwei Aussparungen angeordneten Vorsprüngen der Befestigungsschiene und hintergreifen diese. Auf diese Weise ist es möglich, daß die Befestigungsvorrichtung zu ihrer Montage exakt in der Stellung auf der Befestigungsschiene aufgesetzt wird, in welcher sie sich auch am Ende der Montage befindet. Ein Verschieben des Grundkörpers braucht nach dem Aufsetzen der Befestigungsvorrichtung auf die Befestigungsschiene nicht mehr stattzufinden; der im Flugzeuginneren zur Verfügung stehende Raum kann optimal genutzt werden, nachdem die Montage der Einbauten keine Längsverschiebbarkeit der Komponenten erfordert. Auch schwere Komponenten wie beispielsweise eine eine komplette Sanitätsausrüstung umfassende Zelle, welche nur unter Zuhilfenahme von technischen Hilfsmitteln angehoben und bewegt werden können, lassen sich mit der erfindungsgemäßen Schnell-Befestigungsvorrichtung besonders vorteilhaft im Flugzeuginneren befestigen. Wo eine Längsverschiebbarkeit der aufgesetzten Befestigungsvorrichtung erwünscht ist, läßt sich dies - wie bereits weiter oben erläutert - durch in Axialrichtung verschiebbar geführte, anhebbare Rastzapfen erreichen oder durch die ebenfalls weiter oben erläuterten um die vertikale Achse verschwenkbaren, beidseitig abgeflachten Rastzapfen. Eine derartige Ausgestaltung erhöht die Flexibilität bei der Montage der mit der erfindungsgemäßen Befestigungsvorrichtung bestückten Einbauten-Komponenten. Damit kann ein sog. Quick-Change Interior ermöglicht werden, wo in kurzen Bodenzeiten des Flugzeuges der Innenraum ausgetauscht werden kann.

Die unter der Bezeichnung "Quick-floor-rail-attachment" bzw. "Quickchange" zum Einsatz kommende erfindungsgemäße Schnell-Befestigungsvorrichtung ist zum Zusammenwirken mit den drei gebräuchlichen Kategorien von Sitzschienen, wie sie in der Luftfahrt bekannt sind ("Light Duty Track", "Medium Duty Track", "Heavy Duty Track"), geeignet.

Die Wirkungsverbindung zwischen dem Betätigungshebel und dem Riegelkörper kann auf verschiedene Weise realisiert werden. Besonders bevorzugt besteht sie aus einem Lenker, der mit dem Betätigungshebel und dem Riegelkörper gelenkig verbunden ist, wobei die jeweilige Gelenkachse quer zur Verschieberichtung des Riegelkörpers, d.h. quer zur Längsachse des Grundkörpers verläuft. Dabei ist es zweckmässig, wenn der Lenker beim Verriegeln, d.h. wenn der Betätigungshebel aus der Montagestellung in die Riegelstellung gebracht wird, auf Zug beansprucht wird. Eine andere bevorzugte Ausgestaltung der Wirkungsverbindung zwischen dem Betätigungshebel und dem Riegelkörper besteht aus einer Verzahnung, wobei der Betätigungshebel ein Zahnsegment umfaßt und der Riegelkörper eine lineare Verzahnung (Zahnstange) aufweist. Auf diese Weise läßt sich ein Bauteil (der Lenker) sparen und die Montierbarkeit der Vorrichtung wird erleichtert. Desweiteren kann die Betätigung des Riegelkörpers über einen Exzenter, eine mit dem Hebel verbundene spiralförmige Kulisse und einen Gleitstein oder eine Kurvenscheibe, einen Nocken oder dergleichen erfolgen.

Die erfindungsgemäße Befestigungsvorrichtung kann einen weiteren Klemm-Mechanismus umfassen, welcher gleichzeitig mit oder nach der Verriegelung, d.h. der Verschiebung des Riegelkörpers aktiviert wird und die Befestigungsvorrichtung gegen die Befestigungsschiene verspannt, so daß eine rüttelfeste Verbindung entsteht. Insbesondere kann in einem solchen Fall mit dem Betätigungshebel oder seiner Schwenkwelle ein Nocken verbunden sein, der auf einen in den Grundkörper geführten Spannstift wirkt. Bei Verschwenken des Betätigungshebels für den Riegelkörper wird gleichzeitig der Spannstift mittels des Nockens nach unten gegen die Oberkante der Befestigungsschiene gedrückt, so daß die Befestigungsvorrichtung mit der Befestigungsschiene spielfrei verspannt ist.

Zusätzlich oder alternativ können an der Befestigungsvorrichtung in den Berührungszonen zur Befestigungsschiene elastische Elemente, insbesondere aus Gummi vorgesehen sein.

Zur Sicherung der Befestigungsvorrichtung gegen unbeabsichtigtes Lösen können verschiedene Sicherungseinrichtungen vorgesehen sein. Bevorzugt ist an dem Grundkörper eine Sicherungsklinke angeordnet, welche an dem in der Riegelstellung befindlichen Betätigungshebel angreift. Die entsprechende Sicherungsklinke kann in dem Grundkörper in gleicher Weise um eine Achse verschwenkbar wie längsverschiebbar gelagert sein. Diese Sicherungsklinke kann wegen kompakterer Bauweise auch 90° zum Betätigungshebel angeordnet sein. Die Sicherungsklinke ist dabei zweckmäßigerweise federbelastet, d.h. sie wird durch eine Feder in ihrer den Betätigungshebel sichernden Stellung gehalten. Auch kann im Inneren der Befestigungsvorrichtung, d.h. an einer der Gleitflächen zwischen dem Grundkörper und dem Riegelkörper eine als solches bekannte Rastmechanik vorgesehen sein, die beispielsweise aus einer federbelastenden Rastkugel besteht und die in der Riegelstellung des Riegelkörpers dessen Verschieben gegenüber dem Grundkörper sichert. Zusätzlich oder alternativ kann an der Befestigungsvorrichtung desweiteren ein Schloß vorgesehen sein, durch welches eine Entriegelung der Befestigungsvorrichtung durch Unbefugte verhindert wird.

Der Grundkörper ist zweckmäßigerweise in der Weise ausgestaltet, daß die zu befestigenden Einbauten direkt an ihm montiert werden können. Demgemäß weisen bevorzugte Ausführungsformen der erfindungsgemäßen Befestigungsvorrichtung an den Grundkörper angeformte, einstückig mit diesen ausgebildete Befestigungsflächen auf, welche parallel zu der Oberfläche der Befestigungsschiene und somit des Innenraumbodens oder aber senkrecht bezüglich dieser ausgerichtet sind, wobei im letzteren Falle die entsprechende Befestigungsfläche parallel oder quer zur Längsrichtung der Befestigungsschiene verlaufen kann. Auch ist es möglich, daß an dem Grundkörper zwei einen Winkel einschließende Befestigungsflächen zur Befestigung einer Eckverbindung angeformt sind. Ferner sind einfache Cargoverzurreinheiten am Grundkörper angebracht denkbar, z.B. Haken, Ösen, Netze, Paletten und dergleichen.

Mit dem Grundkörper der Befestigungsvorrichtung verbunden oder in diesen integriert kann ein Zwischenglied vorgesehen sein, an welchem die zu befestigende Einbau-Komponente moniert wird. Das Zwischenglied gestattet eine Verstellbarkeit des Grundkörpers der Befestigungsvorrichtung zum Einbauteil, bevorzugt in drei orthogonalen Achsen. Damit können auftretende Schienentoleranzen ausgeglichen werden. Ferner kann mit dem Zwischenglied sog. "Prying Load" oder "Floor Deflection" abgefangen werden, durch zusätzliche Gelenke und Kulissenführungen.

Im folgenden wird die Erfindung anhand der Zeichnung näher erläutert. Es zeigt
- Fig. 1: Längsschnitt und teilweise Seitenansicht eines ersten Ausführungsbeispiels der erfindungsgemäßen Befestigungsvorrichtung in kombinierter Darstellung, wobei ein feststehender Rastzapfen vorgesehen ist,
- Fig. 1a: den erfindungsgemäß vorgesehenen Anti-Rattle-Mechanismus in stark übertriebener Darstellung,
- Fig. 2: einen Querschnitt durch die Befestigungsvorrichtung gemäß Fig. 1 entlang der Linie II-II,
- Fig. 3: einen Längsschnitt durch eine zweite erfindungsgemäße Befestigungsvorrichtung, ebenfalls mit feststehendem Rastzapfen, in perspektivischer Darstellung,
- Fig. 4: einen Längsschnitt durch eine dritte erfindungsgemäße Befestigungsvorrichtung, ebenfalls mit feststehendem Rastzapfen in perspektivischer Darstellung,
- Fig. 5: die perspektivische Ansicht einer vierten erfindungsgemäßen Befestigungsvorrichtung, ebenfalls mit feststehendem Rastzapfen,
- Fig. 6: eine fünfte Ausführungsform der erfindungsgemäßen Befestigungsvorrichtung in Explosionsdarstellung, wobei jedes Rastelement aus zwei feststehenden Rastzapfensegmenten besteht,
- Fig. 7: einen Längsschnitt durch eine sechste Ausführungsform der erfindungsgemäßen Befestigungsvorrichtung in perspektivischer Darstellung, wobei der Rastzapfen anheb- und absenkbar ist, und
- Fig. 8: einen Längsschnitt durch eine siebte Ausführungsform der Befestigungsvorrichtung nach der Erfindung in perspektivischer Darstellung, wobei der Rastzapfen um seine Achse verschenkbar ausgebildet ist.

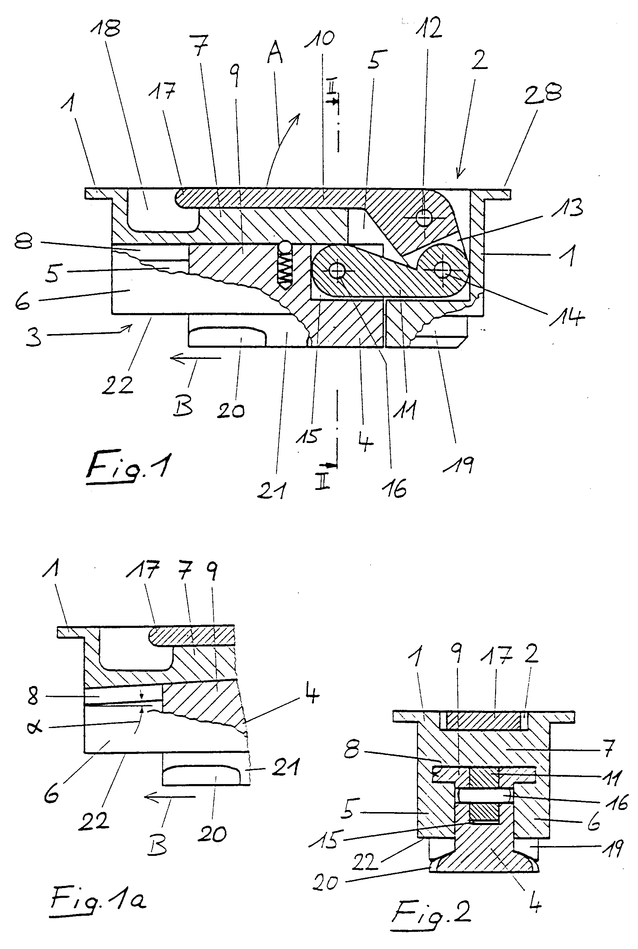

Gemäß den Fig. 1 und 2 dient der Grundkörper 1 als Gehäuse zur weitgehenden Aufnahme der einzelnen Bauteile der Befestigungsvorrichtung. Dabei sind in dem Grundkörper 1 ausgebildet ein oberer Raum 2 zur Aufnahme der Hebelmechanik sowie ein unterer Raum 3 zur längsverschieblichen Aufnahme des Riegelkörpers 4.

Der untere Raum 3 wird dabei seitlich begrenzt durch die Seitenwände 5, 6 sowie die Zwischenwand 7 des Grundkörpers und ist nach unten offen. Die Innenflächen der Seitenwände 5 und 6 des Grundkörpers weisen dabei Führungsnuten 8 auf, so daß der untere Raum 3 im Querschnitt eine T-förmige Gestalt besitzt.

Korrespondierend zu dem T-förmigen Querschnitt des unteren Raumes 3 des Grundkörpers besitzt der Kopf 9 des Riegelkörpers 4 ebenfalls einen T-förmigen Querschnitt, der ein Hin- und Hergleiten des Riegelkörpers 4 in dem unteren Raum 3 des Grundkörpers 1 bei ausreichend exakter Führung gestattet.

In Fig. 1a ist der bei erfindungsgemäßen Befestigungsvorrichtungen vorgesehene Anti-Rattle-Mechanismus erläutert. Und zwar verlaufen die Nuten 8, in denen der Riegelkörper 4 geführt ist, nicht parallel zu den Klemmkanten 22 des Grundkörpers 1; die Klemmkanten 22 und die Nuten 8 schließen vielmehr einen Winkel α miteinander ein. Auf diese Weise erhalten die Führungsnuten 8 eine derartige Neigung bezüglich der Klemmkanten, daß sich der Abstand zwischen den Klemmkanten 22 des Grundkörpers und den pilzförmigen Riegelelementen 20 des Riegelkörpers 4 verringert, wenn der Riegelkörper (entgegen dem Pfeil B) von der Montagestellung in die Riegelstellung verschoben wird. Der Winkel α ist in Fig. 1a stark übertrieben dargestellt; in Wirklichkeit ist er nur sehr gering. Er ist deshalb in den weiteren Figuren der Zeichnung nicht erkennbar, obwohl hier ebenfalls der nach der Erfindung vorgesehene Anti-Rattle-Mechanismus verwirklicht ist.

Um den Riegelkörper 4 in dem Grundkörper 1 zu verschieben, ist eine aus dem Betätigungshebel 10 und dem Lenker 11 zusammengesetzte Hebelmechanik vorgesehen. Der Betätigungshebel 10 ist dabei um eine querverlaufende Schwenkwelle 12, welche in den Seitenwänden 5, 6 des Grundkörpers 1 gelagert ist, verschwenkbar. Die Backen 13 des Betätigungshebels 10 nehmen zwischen sich ein Ende des Lenkers 11 auf, wobei zwischen dem Lenker 11 und dem Betätigungshebel 10 dadurch eine gelenkige Verbindung besteht, daß in den Backen 13 eine querverlaufende Schwenkwelle 14 gelagert ist, auf welcher der Lenker 11 verschwenkt werden kann. Das andere Ende des Lenkers 11 greift eine entsprechend dimensionierte Ausnehmung 15 des Riegelkörpers 4 ein und ist an dem Riegelkörper 4 um eine in diesem angeordnete, querverlaufende Schwenkwelle 16 verschwenkbar angelenkt. Die dargestellte und beschriebene Hebelmechanik bewirkt, daß beim Verschwenken des Betätigungshebels 10 in Richtung des Pfeiles A der Riegelkörper 4 in dem Grundkörper 1 in Richtung des Pfeiles B verschoben wird. In dem Grundkörper 1 ist, um ein besseres Ergreifen des der Handhabung dienenden Endes 17 des im Grundkörper 1 versenkten Betätigungshebels 10 zu ermöglichen, im Bereich des genannten Endes eine Vertiefung 18 vorgesehen.

Der Verriegelungsmechanismus setzt sich aus dem zylindrischen Rastzapfen 19 und zwei pilzförmigen Riegelelementen 20 zusammen. Der Rastzapfen 19 ist dabei einstückig an der Unterseite des Grundkörpers 1 ausgebildet. Die Riegelelemente 20 bilden einen Bestandteil des Riegelkörpers 4; sie sind in dessen unterem, aus dem Grundkörper 1 herausragenden Bereich ausgeformt. Die beiden Riegelelemente 20 sind dabei zur Erhöhung der Festigkeit mit einem Steg 21 verbunden, wobei der Steg von einer Breite ist, daß er zwischen den (weiter unten erläuterten) Vorsprüngen der Befestigungsschiene Platz findet, wenn der Grundkörper mit den Klemmkanten 22 der Seitenwände 5, 6 auf der Befestigungsschiene aufliegt.

Eine übliche, aus einer federbelastenden Kugel bestehende, in den Riegelkörper 4 eingelassene Rastmechanik sichert den Riegelkörper gegen unbeabsichtigtes Verschieben aus der in Fig. 1 dargestellten Riegelstellung heraus. Eine Befestigungsfläche 28, die als oben am Grundkörper 1 umlaufender Rand ausgebildet ist, dient der Befestigung der Schnell-Befestigungsvorrichtung an der entsprechenden Komponente (Sitz, Trennwand, untere Panele von Bordküchen oder anderen Einbauschränken etc.).

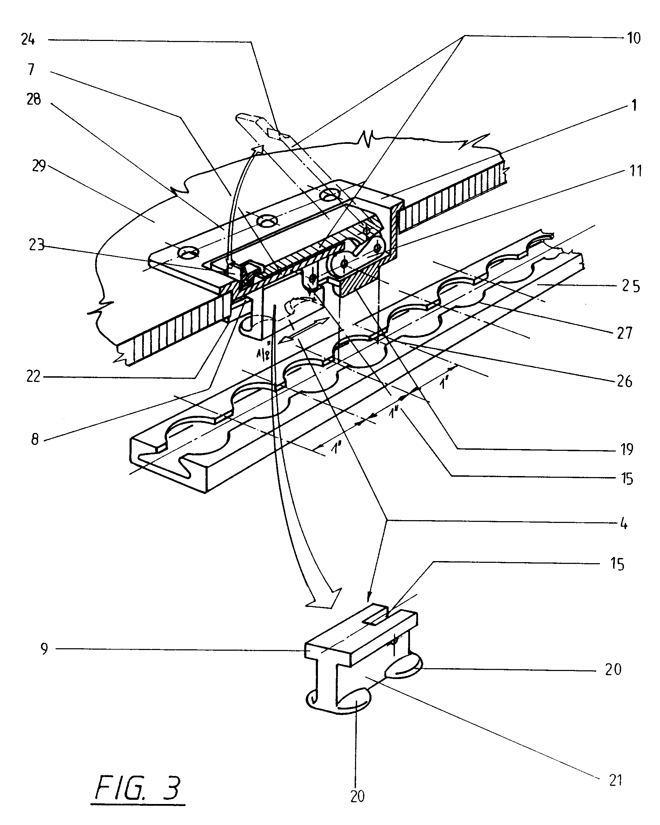

In ihrem grundsätzlichen Aufbau entspricht die Befestigungsvorrichtung gemäß Fig. 3 derjenigen gemäß den Fig. 1 und 2, so daß insoweit auf die entsprechenden Erläuterungen verwiesen werden kann. Anders als bei der in den Fig. 1 und 2 dargestellten Ausführungsform erfolgt die Sicherung der Befestigungsvorrichtung gegen ungewolltes Lösen hier jedoch mittels einer Sicherungsklinke 23, welche in der Zwischenwand 7 des Grundkörpers 1 längsverschieblich geführt ist und eine an dem Betätigungshebel 10 angeordnete Sicherungsnase 24 in der Riegelstellung des Betätigungshebels übergreift. Auf diese Weise wird ein unbeabsichtigtes Anheben des Betätigungshebels und somit Lösen der Befestigungsvorrichtung verhindert. Ferner dient diese Sperrklinke auch dem Anheben des Betätigungshebels aus der Verriegelungsstellung.

In Fig. 3 ist desweiteren die C-förmige Befestigungsschiene 25, mit welcher die Befestigungsvorrichtung zusammenwirken soll, dargestellt. Es handelt sich um eine dem gängigen Standard entsprechende Schiene mit einer 1-Zoll-Teilung, d.h. zwei benachbarte Vorsprünge 26 und zwei benachbarte Aussparungen 27 besitzen zueinander jeweils einen Abstand von einem Zoll. Demgemäß sind auch die beiden pilzförmigen Riegelelemente 20 des Riegelkörpers 4 mit einem Abstand von einem Zoll bezüglich einander angeordnet.

Desweiteren ist in Fig. 3 die mit dem Grundkörper einstückig ausgebildete, Bohrungen zur Aufnahme von Schrauben, Bolzen, Nieten oder dergleichen aufweisende Befestigungsfläche 28 zu erkennen, welche in einer Ebene parallel zu der Oberfläche der Befestigungsschiene 25 und somit - bei einem Einbau der Befestigungsschiene im Boden des Innenraumes - parallel zum Boden des Innenraumes des Flugzeuges verläuft; bei einem Anbau der Befestigungsschiene 25 an einer senkrechten Wand ist dementsprechend auch die Befestigungsfläche 28 vertikal ausgerichtet. Die in Fig. 3 dargestellte Befestigungsvorrichtung dient somit vorrangig zur Befestigung eines Panels 29 bzw. von Unterseiten von Einbau-Komponenten in einer zum Innenraumboden parallelen Ausrichtung. Ein nicht paralleler Befestigungsflansch ist ebenso ausgestaltbar.

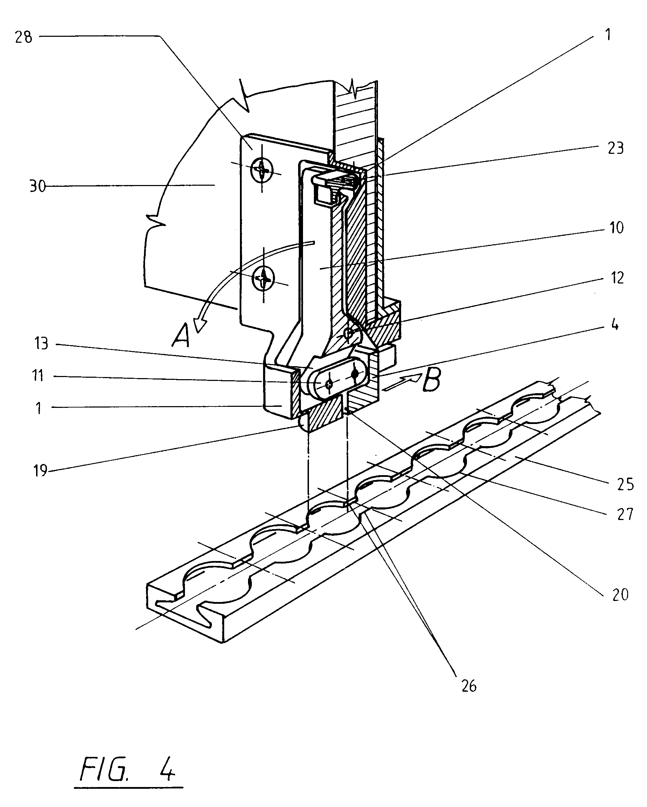

Demgegenüber ist die in Fig. 4 dargestellte Befestigungsvorrichtung - bei Verlegung der Befestigungsschiene im Innenraumboden - zur Befestigung einer senkrecht verlaufenden Trennwand 30 oder von Seitenwänden von Einbaukomponenten an der Befestigungsschiene 25 ausgestaltet. Der Abschnitt des Grundkörpers 1, in welchem der Riegelkörper längsverschieblich geführt ist, tritt dabei senkrecht durch die Trennwand 30 hindurch. Der Betätigungshebel 10 liegt in der dargestellten Riegelstellung senkrecht zur Längsrichtung des Grundkörpers 1 und der Befestigungsschiene 25.

Im übrigen unterscheidet sich die Befestigungsvorrichtung gemäß Fig. 4 von derjenigen gemäß Fig. 3 im wesentlichen lediglich dadurch, daß der Riegelkörper 4 nur ein pilzförmiges Riegelelement 20 aufweist und daß die Sicherungsklinke in dem Grundkörper nicht längsverschieblich, sondern vielmehr verschwenkbar gehalten ist.

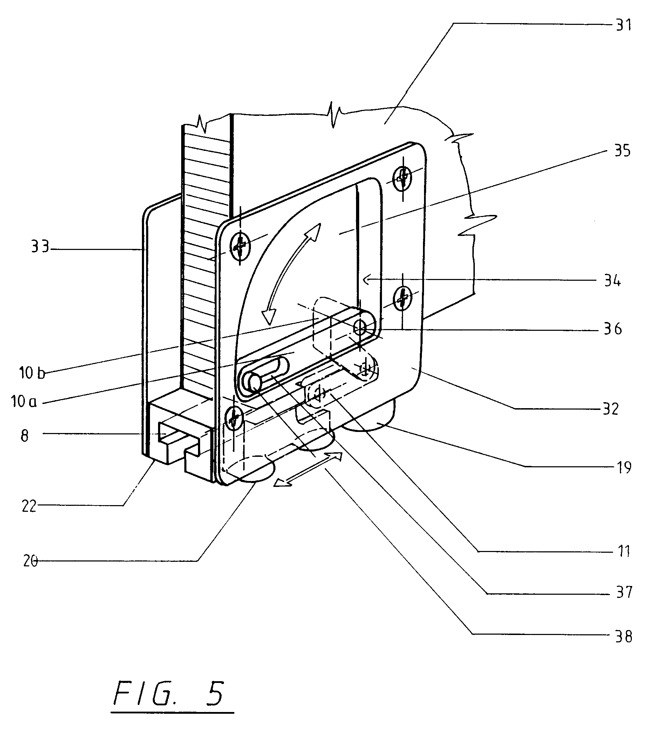

Die Befestigungsvorrichtung gemäß Fig. 5 dient der Befestigung einer senkrechten, in Längsrichtung der Befestigungsschiene verlaufenden Trennwand 31. Dazu ist die Trennwand zwischen zwei mit dem Grundkörper verbundene Befestigungsplatten 32, 33 eingebettet. Der Betätigungshebel 10 ist versenkt angeordnet, d.h. die Trennwand 31 besitzt eine Ausnehmung zur Aufnahme der in der Befestigungsplatte 32 vorgesehenen Mulde 34, innerhalb derer der äußere Arm 10a des Betätigungshebels 10 verschwenkbar ist. Der innere Arm 10b des Betätigungshebels befindet sich hinter der Wand 35 der Mulde und ist mit dem äußeren Arm über die Schwenkwelle 36 verbunden.

Zu seiner Sicherung besitzt der äußere Arm 10a des Betätigungshebels 10 ein Langloch 37, in welches in der (dargestellten) Verriegelungsstellung ein an der Wand 35 der Mulde schwenkbar angelenkter Sicherungsbolzen 38 eingreift.

Im übrigen entsprechen Aufbau und Funktionsweise der in Fig. 5 dargestellten Befestigungsvorrichtung denjenigen der vorstehend erläuterten Ausführungsformen, so daß auf die entsprechenden Erläuterungen verwiesen wird.

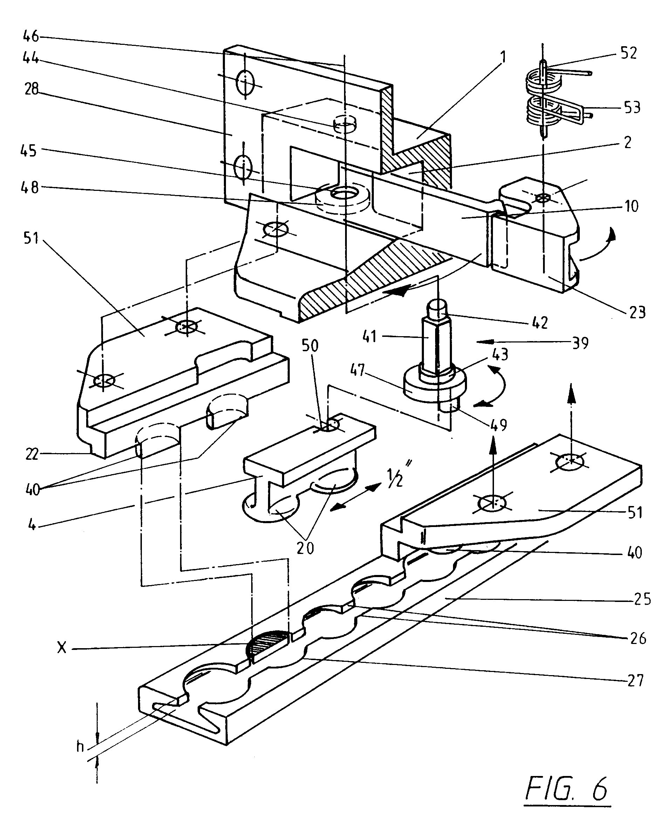

Die Verriegelungsmechanik der Befestigungsvorrichtung gemäß Fig. 6 unterscheidet sich von denjenigen der Figuren 1-5 im wesentlichen in zwei Punkten. Zum einen ist als Wirkungsverbindung zwischen dem Hebel 10 und dem Riegelkörper 4 ein Exzenter 39 vorgesehen; und zum anderen besteht jedes Rastelement aus zwei Rastzapfensegmenten 40, die einander paarweise gegenüberstehen.

In den Grundkörper 1 ist in der weiter oben beschriebenen Weise ein Raum 2 zur Aufnahme des Betätigungshebels 10 vorgesehen. Der Exzenter 39 ist mit dem Betätigungshebel 10 mittels des Vierkants 41 drehfest verbunden. Der oben am Vierkant vorgesehene Zapfen 42 sowie der unterhalb des Vierkants 41 vorgesehen Bund 43 werden in entsprechenden Bohrungen 44 bzw. 45 des Grundkörpers 1 aufgenommen, wodurch der Exzenter 39 und mit ihm der Betätigungshebel 10 in dem Grundkörper 1 um die Achse 46 verschwenkbar gelagert wird. Die Exzenterscheibe 47 tritt dabei in die entsprechende Ausnehmung 48 im Grundkörper ein.

An der Exzenterscheibe 47 ist nach unten vorspringend der Exzenterbolzen 49 vorgesehen. Dieser greift im montierten Zustand der Vorrichtung in die Nut 50 am Riegelkörper 4 ein.

Der Grundkörper ist geteilt aufgebaut. Neben dem oberen Abschnitt, welcher den Betätigungshebel 10 und den Exzenter 39 aufnimmt, umfaßt er zwei Backen 51, welche im fertig montierten Zustand der Befestigungsvorrichtung mit dem oberen Teil festverschraubt sind. Im montierten Zustand der Befestigungsvorrichtung ist der Riegelkörper in der weiter oben beschriebenen Weise in dem aus oberen Teil und Backen zusammengesetzten Grundkörper längsverschieblich geführt. Durch Verschwenken des Betätigungshebels 10 wird mittels des Exzenters 39 der Riegelkörper 4 in dem Grundkörper in Längsrichtung verschoben, wobei der Verschiebeweg der halben Teilung der Befestigungsschiene 25 entspricht.

An jeder Backe 51 sind zwei Rastzapfensegmente 40 angeformt. Diese stehen gegenüber der Klemmkante 22, mit der die Befestigungsvorrichtung oben auf der Befestigungsschiene 25 aufliegt, nur geringfügig nach unten vor, nämlich entsprechend dem Maß h der Befestigungsschiene 25. Die Riegelelemente 20 des Riegelkörpers 4 können somit unter den Rastzapfensegmenten 40 verschoben werden. In der Montagestellung der Befestigungsvorrichtung, also in jener Stellung, in welcher die Befestigungsvorrichtung auf die Befestigungsschiene 25 aufgesetzt wird, befinden sich die pilzförmigen Köpfe der Riegelelemente 20 in einer zu den Rastzapfensegmenten 40 ausgerichteten Stellung. In dieser Stellung können die Köpfe der Riegelelemente 20 durch die Aussparungen 27 der Befestigungsschiene hindurchtreten, und gleichzeitig treten die Rastzapfensegmente 40 in die selben Aussparungen 27 ein. Ein in eine Aussparung 27 eingesetztes Rastzapfensegment 40 ist bei X dargestellt. Anschließend wird der Riegelkörper 4 durch Verschwenken des Betätigungshebels 10 um eine halbe Teilung in Längsrichtung der Befestigungsvorrichtung verschoben, so daß die Köpfe der Riegelelemente 20 unterhalb der Vorsprünge 26 der Befestigungsschiene liegen.

In den oberen Teil des Grundkörpers ist um eine Schwenkwelle 52 veschwenkbar die Sicherungsklinke 23 eingelassen. Sie wird unter der Vorspannung der Feder 53 in der den Betätigungshebel 10 verriegelnden Stellung gehalten.

An dem oberen Teil des Grundkörpers 1 ist eine Befestigungsfläche 28 angeformt, welche sich senkrecht zur Befestigungsschiene erstreckt. Es sind bei diesen Exzenterlösung Winkeleinschließende zwischen Schiene und Panel von 0° - 90° möglich. Im übrigen entspricht die in Fig. 6 dargestellte Vorrichtung den weiter oben erläuterten Ausführungsformen der Befestigungsvorrichtung, so daß auf die entsprechenden Ausführungen verwiesen werden kann.

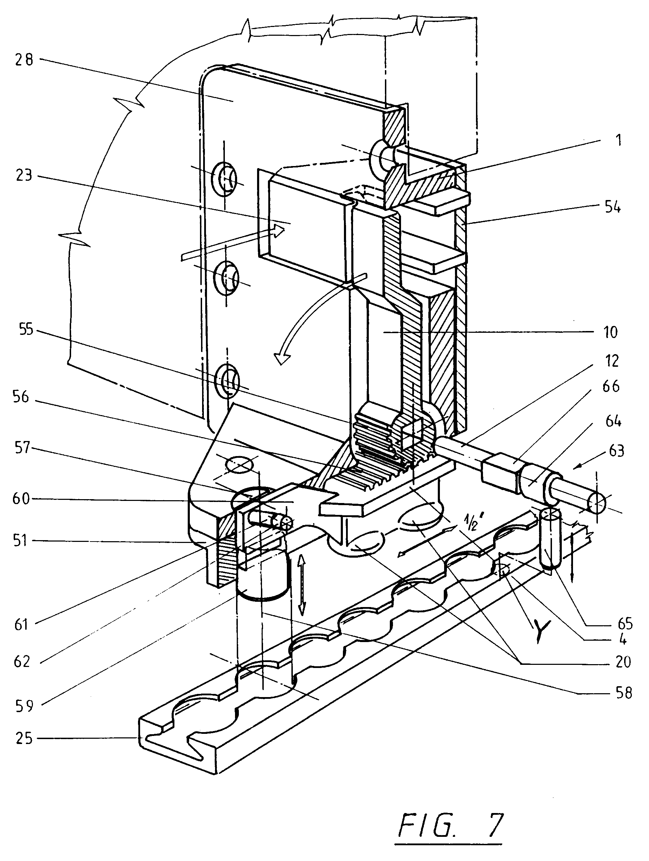

Die in Fig. 7 dargestellte Ausführungsform der Befestigungsvorrichtung unterscheidet sich in drei wesentlichen Punkten von den vorstehend erläuterten Ausführungsformen. Zum einen ist als Wirkverbindung zwischen dem Betätigungshebel 10 und dem Riegelkörper 4 eine Verzahnung vorgesehen. Zum zweiten ist der Rastzapfen nicht fest mit dem Grundkörper verbunden, sondern vielmehr in axialer Richtung verschieblich in diesem aufgenommen. Zum dritten ist mit dem Betätigungshebel eine Anti-Rattle-Mechanik verbunden. Wie im Falle der in Fig. 6 dargestellten Befestigungsvorrichtung umfaßt der Grundkörper einen oberen Teil und zwei mit diesem festverbundene Backen 51. Dabei ist die Rückseite des oberen Teils mit einer Platte 54 abgedeckt.

Der auf der Schwenkwelle 12 in dem Grundkörper 1 gelagerte Betätigungshebel 10 besitzt eine als Zahnsegment 55 ausgebildete Verzahnung. Am Riegelkörper 4 ist eine mit dem Zahnsegement 55 zusammenwirkende Zahnstange 56, welche die Oberseite des Riegelkörpers 4 darstellt, vorgesehen. Durch diese Verzahnung wird die Verschwenkbewegung des Betätigungshebels 10 in die translatorische Bewegung des Riegelkörpers 4 in Längsrichtung der Befestigungsvorrichtung umgesetzt.

In den Grundkörper ist eine Bohrung 57 mit vertikaler Achse 58 vorgesehen. In dieser Bohrung 57 ist der Rastzapfen 59 verschieblich geführt. Die vertikale Bewegung des Rastzapfens 59 ist an die horizontale Bewegung des Riegelkörpers 4 mechanisch gekoppelt. Hierzu ist an dem Riegelkörper 4 ein flacher Vorsprung 60 vorgesehen, welcher ein schräg angeordnetes Langloch 61 aufweist. In diesem Langloch 61 wird ein Stift 62 geführt, der in den Rastzapfen 59 eingesetzt ist. Wird der Riegelkörper 4 bei Verschwenken des Betätigungshebels 10 in Längsrichtung der Befestigungsvorrichtung verschoben, gleitet der Stift 62 in dem als Kulisse dienenden Langloch 61 und verschiebt hierdurch den Rastzapfen 59 in axialer Richtung.

Die Anti-Rattle-Vorrichtung 63 umfaßt einen Nocken 64, welcher auf der Schwenkwelle 12 des Betätigungshebels 10 vorgesehen ist, und einen Spannstift 65, welcher in vertikaler Richtung verschieblich in dem Grundkörper geführt ist. Zur Drehsicherung des Nockens 64 gegenüber dem Betätigungshebel 10 ist auf der Schwenkwelle 12 ein Vierkant 66 ausgebildet, welcher in eine Vierkantbohrung des Betätigungshebels 10 eingreift. In der in Fig. 7 dargestellten Riegelstellung der Befestigungsvorrichtung drückt der Nocken 64 den Spannstift 65 nach unten auf die Befestigungsschiene; der entsprechende Aufstützpunkt des Spannstifts auf der Befestigungsschiene 25 ist bei Y skizziert.

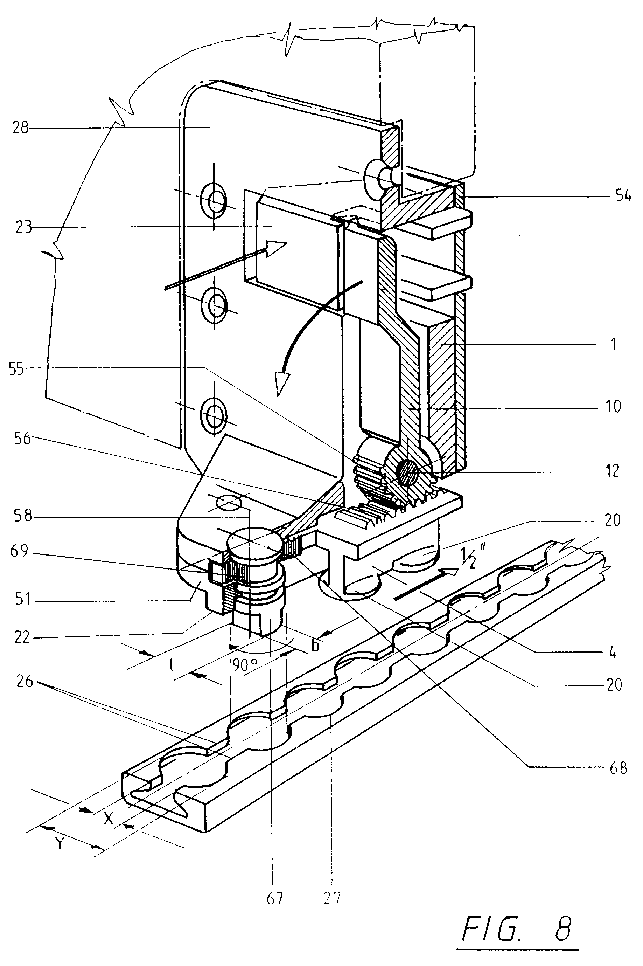

Die Befestigungsvorrichtung gemäß Fig. 8 entspricht im wesentlichen derjenigen gemäß Fig. 7. Jedoch ist hier als Rastelement kein axialverschieblicher, sondern vielmehr ein um seine Achse 58 verschwenkbarer Rastzapfen 67 vorgesehen. Der Rastzapfen ist in seinem mit der Befestigungsschiene 25 zusammenwirkenden Bereich in der Weise beidseitig abgeflacht, daß seine minimale Erstreckung b geringfügig kleiner ist als die lichte Weite x zwischen zwei einander gegenüberstehenden Vorsprüngen 26 der Befestigungsschiene 25. Die größte Erstreckung l des abgeflachten Rastzapfens 67 entspricht demgegenüber im wesentlichen dem Durchmesser y der kreisförmigen Aussparungen 27. Die Verschwenkbewegung des abgeflachten Rastzapfens 67 um die vertikale Achse 58 ist dadurch mit der translatorischen Bewegung des Riegelkörpers 4 gekoppelt, daß an letzterem eine Zahnstange 68 vorgesehen ist, welche mit einem an den Rastzapfen 67 vorgesehenen Zahnsegment 69 zusammenwirkt. In der in Fig. 8 dargestellten Riegelstellung der Befestigungsvorrichtung verläuft die maximale Abmessung l des Rastzapfens 67 quer zur Längsrichtung der Befestigungsschiene 25, und der Abstand des Rastzapfens zu dem ihm zunächstliegenden Riegelelement 20 beträgt das 1 ½-fache der Teilung der Befestigungsschiene 25. In der Montagestellung der Befestigungsvorrichtung hingegen, d.h. bei heruntergeschwenktem Betätigungshebel 10, ist der Rastzapfen 67 um 90° geschwenkt, so daß seine maximale Erstreckung l in Längsrichtung der Befestigungsschiene, die minimale Erstreckung b hingegen quer zu dieser verläuft; und der Abstand zwischen dem Rastzapfen 67 und dem ihm zunächstliegenden Riegelelement 20 entspricht genau dem 1-fachen Wert der Teilung der Befestigungsschiene.

Bei der Befestigungsvorrichtung gemäß Fig. 8 ist eine Anti-Rattle-Mechanik wie bereits beschrieben vorgesehen, und im übrigen entspricht diese Vorrichtung im wesentlichen derjenigen gemäß Fig. 7, so daß auf die entsprechenden Erläuterungen verwiesen werden kann.

## Patentansprüche

1. Schnell-Befestigungsvorrichtung zur Befestigung von Komponenten der Innenraumgestaltung eines Flugzeuges, Helikopters oder Raumfahrzeuges bzw. von Lastverzurrelementen an im Boden oder in Wandflächen des Innenraumes verlegten C-förmigen Befestigungsschienen, umfassend einen Grundkörper (1), mindestens ein dem Grundkörper (1) zugeordnetes, der Längsarretierung der Befestigungsvorrichtung in der Befestigungsschiene dienendes Rastelement (19, 40, 59, 67) und einen in Längsrichtung der Befestigungsvorrichtung verschiebbar in dem Grundkörper (1) geführten Riegelkörper (4) mit mindestens einem pilzförmigen, zum Eingriff in die Hinterschneidungen der Befestigungsschiene bestimmten Riegelelemente (20),
dadurch gekennzeichnet,
daß ein auf den Verriegelungsmechanismus wirkender Betätigungshebel (10) vorgesehen ist, welcher mit dem Riegelkörper (4) in einer Wirkungsverbindung steht, derart, daß sich beim Verschwenken des Betätigungshebels (10) der Riegelkörper (4) bezüglich des Grundkörpers (1) in dessen Längsrichtung verschiebt, und daß die Führung des Riegelkörpers (4) in dem Grundkörper (1) in der Weise erfolgt, daß sich der Abstand der Riegelelemente (20) zu den Klemmkanten (22) des Grundkörpers (1) beim Verschieben des Riegelkörpers von der Montagestellung in die Riegelstellung verringert, zur Herstellung einer Anti-Rattle-Verbindung.

2. Schnell-Befestigungsvorrichtung nach Anspruch 1,
dadurch gekennzeichnet,
daß in dem Grundkörper (1) Führungsnuten (8) vorgesehen sind, welche mit den Klemmkanten (22) einen geringen Winkel einschließen.

3. Schnell-Befestigungsvorrichtung nach Anspruch 1,
dadurch gekennzeichnet,
daß das/die Rastelement(e) als starr mit dem Grundkörper (1) verbundene(r) Rastzapfen (19) ausgebildet ist/sind.

4. Schnell-Befestigungsvorrichtung nach Anspruch 1,
dadurch gekennzeichnet,
daß das/die Rastelement(e) als in axialer Richtung (58) verschiebliche(r) in dem Grundkörper (1) geführte(r) Rastzapfen (57) ausgebildet ist/sind.

5. Schnell-Befestigungsvorrichtung nach Anspruch 4,
dadurch gekennzeichnet,
daß die Bewegung des Rastzapfens/der Rastzapfen (57) in axialer Richtung (58) über mechanische Übertragungsmittel (60, 61, 62) mit der Bewegung des Riegelkörpers (4) gekoppelt ist.

6. Schnell-Befestigungsvorrichtung nach Anspruch 1,
dadurch gekennzeichnet,
daß das/die Rastelement(e) als um seine/ihre Achse (58) drehbar in dem Grundkörper (1) gelagerte(r) Rastzapfen (67) ausgebildet ist/sind, wobei der/die Rastzapfen (57) in seinen/ihren mit der Befestigungsschiene zusammenwirkenden Bereich(en) einen abgeflachten Querschnitt besitzt/besitzen.

7. Schnell-Befestigungsvorrichtung nach Anspruch 6,
dadurch gekennzeichnet,
daß die Verschwenkbewegung des Rastzapfens/der Rastzapfen über mechanische Übertragungsmittel mit der Bewegung des Riegelkörpers gekoppelt ist.

8. Schnell-Befestigungsvorrichtung nach Anspruch 1,
dadurch gekennzeichnet,
daß mindestens ein Rastelement zwei einander gegenüberstehende Rastzapfensegmente (40) umfaßt, zwischen denen der verschiebbar geführte Riegelkörper (4) verläuft, wobei in der Montagestellung des Riegelkörpers (4) das Riegelelement/die Riegelelemente (20) mit den jeweiligen Rastzapfensegmenten (40) des Rastelements/der Rastelemente ausgerichtet ist/sind.

9. Schnell-Befestigungsvorrichtung nach Anspruch 1,
dadurch gekennzeichnet,
daß die Wirkungsverbindung zwischen dem Betätigungshebel (10) und dem Riegelkörper (4) aus einem Exzenter (39) besteht.

10. Schnell-Befestigungsvorrichtung gemäß Anspruch 1,
dadurch gekennzeichnet,
daß die Wirkungsverbindung zwischen dem Betätigungshebel (10) und dem Riegelkörper (4) aus einer Verzahnung besteht, wobei dem Betätigungshebel (10) ein Zahnsegment (55) und dem Riegelkörper (4) eine Zahnstange (56) zugeordnet ist.

11. Schnell-Befestigungsvorrichtung gemäß Anspruch 1,
dadurch gekennzeichnet,
daß die Wirkungsverbindung zwischen dem Betätigungshebel (10) und dem Riegelkörper (4) einen Lenker (11) umfaßt, der an dem Betätigungshebel und an dem Riegelkörper mit quer zur Verschieberichtung des Riegelkörpers (4) verlaufenden Gelenkachsen angelenkt ist.

12. Schnell-Befestigungsvorrichtung nach Anspruch 11,
dadurch gekennzeichnet,
daß der Lenker (11) beim Verriegeln der Befestigungsvorrichtung auf Zug beansprucht wird.

13. Schnell-Befestigungsvorrichtung nach Anspruch 1,
dadurch gekennzeichnet,
daß eine Rastmechanik vorgesehen ist, welche den Riegelkörper (4) in der Riegelstellung gegen Verschieben gegenüber dem Grundkörper (1) sichert.

14. Schnell-Befestigungsvorrichtung nach Anspruch 1,
dadurch gekennzeichnet,
daß an dem Grundkörper (1) eine auf den Betätigungshebel (10) wirkende Sicherungsklinke (23) angeordnet ist.

15. Schnell-Befestigungsvorrichtung nach Anspruch 1,
dadurch gekennzeichnet,
daß der Betätigungshebel (10) auf einen Nocken (64) wirkt, der einen in dem Grundkörper (1) geführten, auf die Befestigungsschiene drückenden Spannstift (65) betätigt.

16. Schnell-Befestigungsvorrichtung nach Anspruch 1,
dadurch gekennzeichnet,
daß dem Grundkörper (1) ein zwischen diesem und der Einbau-Komponente angordnetes Zwischenglied zugeordnet ist, welches eine Verstellbarkeit des Grundkörpers zu der Einbaukomponente gestattet.

## Claims

1. Quick-change track lock for the securing of interior-design articles in an aircraft, helicopter or spacecraft or for the securing of load-restraining members on C-shaped retaining tracks laid in the floor or wall of the interior, comprising: a main body (1); at least one detent member (19, 40, 59, 67) associated with the main body (1) and serving to fix the track lock longitudinally in the retaining track; and a locking body (4) guided in the main body (1) and displaceable in the longitudinal direction of the track lock, said locking body (4) comprising at least one mushroom-shaped locking member (20) intended to engage the undercut portions of the retaining track,
characterized in that
an actuating lever (10) is provided, said actuating lever (10) acting on the locking mechanism and coacting with the locking body (4) in such a manner that, when the actuating lever (10) is swiveled, the locking body (4) is displaced with respect to the main body (1) in the longitudinal direction thereof, and in that the locking body (4) is guided in the main body (1) in such a manner that the distance between the locking members (20) and the clamping edges (22) of the main body (1) becomes smaller when the locking body is displaced from the as-placed position into the locked position, to establish an antirattle connection.

2. Quick-change track lock according to claim 1,
characterized in that
guide channels (8) are provided in the main body (1), said guide channels (8) forming a small angle with the clamping edges (22).

3. Quick-change track lock according to claim 1,
characterized in that
the detent member(s) is/are in the form of detent pin(s) (19) rigidly connected to the main body (1).

4. Quick-change track lock according to claim 1,
characterized in that
the detent member(s) is/are in the form of detent pin(s) (57) guided in the main body (1) and displaceable in the axial direction (58).

5. Quick-change track lock according to claim 4,
characterized in that
the motion of the detent pin(s) (57) in the axial direction (58) is coupled by mechanical transmission means (60, 61, 62) to the motion of the locking body (4).

6. Quick-change track lock according to claim 1,
characterized in that
the detent member(s) is/are in the form of detent pin(s) (67) held in the main body (1) and rotatable about its/their axis (58), with the detent pin(s) (57) having a flattened cross section in its/their region(s) that cooperate with the retaining track.

7. Quick-change track lock according to claim 6,
characterized in that
the swiveling motion of the detent pin(s) is coupled by mechanical transmission means to the motion of the locking body.

8. Quick-change track lock according to claim 1,
characterized in that
at least one detent member comprises two oppositely positioned detent-pin segments (40), wherebetween extends the displaceably guided locking body (4), wherein, with the locking body (4) in the as-placed position, the locking member(s) (20) is/are aligned with the respective detent-pin segments (40) of the detent member(s).

9. Quick-change track lock according to claim 1,
characterized in that
the active connection between the actuating lever (10) and the locking body (4) consists of an eccentric (39).

10. Quick-change track lock according to claim 1,
characterized in that
the active connection between the actuating lever (10) ad the locking body (4) consists of a toothed connection, with the actuating lever (10) being associated with a toothed segment (55) and the locking body (4) being associated with a toothed rack (56).

11. Quick-change track lock according to claim 1,
characterized in that
the active connection between the actuating lever (10) and the locking body (4) comprises a link (11), said link (11) being articulatedly connected to the actuating lever and to the locking body with articulation axes extending transversely with respect to the displacement direction of the locking body (4).

12. Quick-change track lock according to claim 11,
characterized in that
the link (11) is subjected to tensile loading when the track lock is being locked.

13. Quick-change track lock according to claim 1,
characterized in that
a detent mechanism is provided, said detent mechanism locking the locking body (4) when in the locked position against displacement with respect to the main body (1).

14. Quick-change track lock according to claim 1,
characterized in that
a securing catch (23) is disposed on the main body (1), said securing catch (23) acting on the actuating lever (10).

15. Quick-change track lock according to claim 1,
characterized in that
the actuating lever (10) acts on a cam (64), said cam (64) actuating a spring pin (65), said spring pin (65) being guided in the main body (1) and pressing on the retaining track.

16. Quick-change track lock according to claim 1,
characterized in that
the main body (1) is associated with an intermediate member disposed between the main body (1) and the article to be secured, said intermediate member permitting the adjustability of the main body with respect to the article to be secured.

## Revendications

1. Dispositif de fixation rapide destiné à la fixation de composants de l'aménagement intérieur d'un avion, d'un hélicoptère ou d'un véhicule spatial ou à la fixation d'éléments d'arrimage de charges sur des rails de fixation en forme de C disposés sur le plancher ou aux parois de l'intérieur, comportant un corps de base (1), au moins un élément d'encliquetage (19, 40, 59, 67) associé au corps de base (1) et servant au blocage longitudinal du dispositif de fixation sur le rail de fixation et un corps de verrouillage (4) disposé dans le corps de base (1) de telle façon qu'il puisse coulisser dans l'axe longitudinal du dispositif de fixation et comprenant au moins un élément de verrouillage en forme de champignon (20) s'engageant dans les contre-dépouilles du rail de fixation,
caractérisé en ce que
un levier de manoeuvre (10) est prévu qui agit sur le mécanisme de verrouillage et coopère en liaison efficace avec le corps de verrouillage (4) de telle sorte que lorsqu'on actionne le levier de manoeuvre (10), le corps de verrouillage (4) se déplace par rapport au corps de base (1) en direction longitudinale de celui-ci et que le corps de verrouillage (4) est guidé dans le corps de base (1) de manière à ce que la distance des éléments de verrouillage (20) par rapport aux arêtes de serrage (22) du corps de base (1) diminue lorsque le corps de verrouillage est amené de la position d'assemblage à la position de verrouillage pour constituer un assemblage anti-vibrations ("anti-rattle").

2. Dispositif de fixation rapide selon la revendication 1,
caractérisé en ce que
des rainures de guidage (8) sont prévues dans le corps de base (1) qui forment un angle faible avec les arêtes de serrage (22).

3. Dispositif de fixation rapide selon la revendication 1,
caractérisé en ce que
l'élément/les éléments d'encliquetage est/sont agencé(s) sous forme d'un tenon/de tenons (19) relié(s) rigidement au corps de base (1).

4. Dispositif de fixation rapide selon la revendication 1,
caractérisé en ce que
l'élément/les éléments d'encliquetage est/sont agencé(s) sous forme d'un tenon/de tenons (57) disposé(s) dans le corps de base (1) de manière à pouvoir être déplacé(s) en direction axiale (58).

5. Dispositif de fixation rapide selon la revendication 4,
caractérisé en ce que
le mouvement du tenon/des tenons d'encliquetage (57) en direction axiale (58) est couplé au mouvement du corps de verrouillage (4) à l'aide de moyens de transmission mécaniques (60, 61, 62).

6. Dispositif de fixation rapide selon la revendication 1,
caractérisé en ce que
l'élément/les éléments d'encliquetage est/sont agencé(s) sous forme d'un tenon/de tenons d'ecliquetage (67) logé(s) de façon orientable autour de son/leurs axe(s) dans le corps de base (1), le/les tenon(s) d'encliquetage (57) ayant une section aplatie dans son/leurs secteur(s) coopérant avec le rail de fixation.

7. Dispositif de fixation rapide selon la revendication 6,
caractérisé en ce que
le mouvement de pivotement du tenon/des tenons d'encliquetage est couplé au mouvement du corps de verrouillage à l'aide de moyens de transmission mécaniques.

8. Dispositif de fixation rapide selon la revendication 1,
caractérisé en ce que
au moins un élément d'encliquetage comprend deux segments de tenon d'encliquetage (40) opposés entre lesquels coulisse le corps de verouillage (4), l'élément/les éléments de verrouillage (20) étant aligné(s) sur les segments de tenon d'encliquetage (40) correspondants de l'élément/des éléments d'encliquetage lorsque le corps de verrouillage (4) est en position d'assemblage.

9. Dispositif de fixation rapide selon la revendication 1,
caractérisé en ce que
la liaison efficace entre le levier de manoeuvre (10) et le corps de verrouillage (4) est assurée par un excentrique (39).

10. Dispositif de fixation rapide selon la revendication 1,
caractérisé en ce que
la liaison efficace entre le levier de manoeuvre (10) et le corps de verrouillage (4) est assurée par une denture, un segment denté (55) étant associé au levier de manoeuvre (10) et une crémaillère (56) étant asociée au corps de verrouillage (4).

11. Dispositif de fixation rapide selon la revendication 1,
caractérisé en ce que
la liaison efficace entre le levier de manoeuvre (10) et le corps de verrouillage (4) comprend un élément de guidage (11) qui est articulé sur le levier de manoeuvre et sur le corps de verrouillage à l'aide d'axes d'articulation disposés de façon transversale par rapport au sens de déplacement du corps de verrouillage (4).

12. Dispositif de fixation rapide selon la revendication 11,
caractérisé en ce que
l'élément de guidage (11) est soumis à une contrainte de traction lors du verrouillage du dispositif de fixation.

13. Dispositif de fixation rapide selon la revendication 1,
caractérisé en ce que
un mécanisme d'encliquetage est prévu qui protège le corps de verrouillage (4) en position de verrouillage contre tout déplacement par rapport au corps de base (1).

14. Dispositif de fixation rapide selon la revendication 1,
caractérisé en ce que
un cliquet de sécurité (23) est disposé sur le corps de base (1) agissant sur le levier de manoeuvre (10).

15. Dispositif de fixation rapide selon la revendication 1,
caractérisé en ce que
le levier de manoeuvre (10) agit sur une came (64) qui commande une goupille de serrage (65) disposée dans le corps de base (1) et exerçant une pression sur le rail de fixation.

16. Dispositif de fixation rapide selon la revendication 1,
caractérisé en ce que
un élément intermédiaire placé entre le corps de base (1) et le composant d'installation est associé au corps de base (1) permettant le réglage du corps de base par rapport au composant d'installation.
